# EUROPEAN PATENT APPLICATION

(11) **EP 4 808 123 A1**
(43) Date of publication of application: **16.09.2026**
(21) Application number: 25305341.7
(22) Date of filing: 13.03.2025
(51) Int. Cl.: H04N 19/176, H04N 19/523, H04N 19/59, H04N 19/82

(54) **MOTION COMPENSATION FOR VIDEO BLOCKS**

(71) Applicant: InterDigital CE Patent Holdings, SAS, 75017 Paris (FR)
(72) Inventor: LE GUYADEC, Pascal, 35760 SAINT GREGOIRE (FR); GALPIN, Franck, 35235 THORIGNE-FOUILLARD (FR); THIEBAUD, Sylvain, 35530 NOYAL SUR VILAINE (FR); ROBERT, Antoine, 35140 MEZIERES SUR COUESNON (FR)
(74) Representative: Interdigital

(57) **Abstract**

Systems, methods, and instrumentalities associated with motion compensation for video blocks. An example device may obtain a current block, wherein the current block has a height and a width. The device may determine an order for performing motion compensation based on the height and the width. The order for performing motion compensation may indicate whether to perform motion compensation for the current block in a horizontal direction prior to, or subsequent to performing motion compensation for the current block in a vertical direction. The device may obtain a plurality of reference samples by performing motion compensation for the current block in the order for performing motion compensation. The device may decode the current block based on the plurality of reference samples

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and instrumentalities are disclosed for motion compensation for video blocks. An example device (e.g., for video decoding) may obtain a current block, wherein the current block has a height and a width. The device may determine an order for performing motion compensation based on the height and the width. The order for performing motion compensation may indicate whether to perform motion compensation for the current block in a horizontal direction prior to, or subsequent to performing motion compensation for the current block in a vertical direction. The device may obtain a plurality of reference samples by performing motion compensation for the current block in the order for performing motion compensation. The device may decode the current block based on the plurality of reference samples.

The video decoding device may obtain a first block. The first block may have a first height and a first width. The first height may be greater than the first width. Based on the first height being greater than the first width, the device may obtain a first plurality of reference samples by performing motion compensation for the first block in a horizontal direction prior to performing motion compensation for the first block in a vertical direction. The device may decode the first block based on the first plurality of reference samples. The device may obtain a second block. The second block may have a second height and a second width. The second width may be greater than the second height. Based on the second width being greater than the second height, the device may obtain a second plurality of reference samples by performing motion compensation for the second block in the vertical direction prior to performing motion compensation for the second block in the horizontal direction. The device may decode the second block based on the second plurality of reference samples.

The device may determine a candidate height associated with a block. The device may determine a height of the block based on the candidate height and a minimum prediction block height. On a condition that the candidate height is less than the minimum prediction block height, the height of the block may be equal to the minimum prediction block height. On a condition that the candidate height is greater than or equal to the minimum prediction block height, the height of the block may be set to equal to the candidate height. The device may obtain reference samples by performing motion compensation for the block. The device may decode the block based on reference samples. The minimum prediction block height may be equal to a predetermined number of pixels, such as two pixels or four pixels.

The device may determine a candidate width associated with a block. The device may determine a width of the block based on the candidate width and a minimum prediction block width. On a condition that the candidate width is less than the minimum prediction block width, the width of the block may be equal to the minimum prediction block width. On a condition that the candidate width is greater than or equal to the minimum prediction block width, the height may be set to equal to the candidate width. The device may obtain reference samples by performing motion compensation for the block. The device may decode the block based on the reference samples. The minimum prediction block width may be equal to a predetermined number of pixels, such as two pixels or four pixels.

A first number of operations to perform motion compensation for the first block in the horizontal direction prior to performing motion compensation for the first block in the vertical direction may be less than a second number of operations to perform motion compensation for the first block in the vertical direction prior to performing motion compensation for the first block in the horizontal direction.

The device may obtain a third block. The third block may have a third height and a third width. The third height may be equal to the third width. Based on the third height being equal to the third width, the device may obtain a third plurality of reference samples by performing motion compensation for the third block in the horizontal direction prior to performing motion compensation for the third block in the vertical direction. The device may decode the third block based on the third plurality of reference samples.

The device may perform motion compensation for the first block in the horizontal direction prior to performing motion compensation for the first block in the vertical direction by determining a sample array based on horizontal filter coefficients. The device may determine the first plurality of reference samples by applying vertical filter coefficients to the sample array.

A device (e.g., for video encoding may obtain a first block. The first block may have a first height and a first width. The first height may be greater than the first width. Based on the first height being greater than the first width, the device may obtain a first plurality of reference samples by performing motion compensation for the first block in a horizontal direction prior to performing motion compensation for the first block in a vertical direction. The device may encode the first block based on the first plurality of reference samples. The device may obtain a second block. The second block may have a second height and a second width. The second width may be greater than the second height. Based on the second width is greater than the second height, the device may obtain a second plurality of reference samples by performing motion compensation for the second block in the vertical direction prior to performing motion compensation for the second block in the horizontal direction. The device may encode the second block based on the second plurality of reference samples.

The device may determine a candidate height associated with a block. The device may determine a height of the block based on the candidate height and a minimum prediction block height. On a condition that the candidate height is less than the minimum prediction block height, the height of the block may be equal to the minimum prediction block height. On a condition that the candidate height is greater than or equal to the minimum prediction block height, the height of the block may be set to equal to the candidate height. The device may obtain reference samples by performing motion compensation for the block. The device may encode the block based on reference samples. The minimum prediction block height may be equal to a predetermined number of pixels, such as two pixels or four pixels.

The device may determine a candidate width associated with a block. The device may determine a width of the block based on the candidate width and a minimum prediction block width. On a condition that the candidate width is less than the minimum prediction block width, the width of the block may be equal to the minimum prediction block width. On a condition that the candidate width is greater than or equal to the minimum prediction block width, the height may be set to equal to the candidate width. The device may obtain reference samples by performing motion compensation for the block. The device may encode the block based on the reference samples. The minimum prediction block width may be equal to a predetermined number of pixels, such as two pixels or four pixels.

A first number of operations to perform motion compensation for the first block in the horizontal direction prior to performing motion compensation for the first block in the vertical direction may be less than a second number of operations to perform motion compensation for the first block in the vertical direction prior to performing motion compensation for the first block in the horizontal direction.

The device may obtain a third block. The third block may have a third height and a third width. The third height may be equal to the third width. Based on the third height being equal to the third width, the device may obtain a third plurality of reference samples by performing motion compensation for the third block in the horizontal direction prior to performing motion compensation for the third block in the vertical direction. The device may encode the third block based on the third plurality of reference samples.

The device may perform motion compensation for the first block in the horizontal direction prior to performing motion compensation for the first block in the vertical direction by determining a sample array based on horizontal filter coefficients. The device may determine the first plurality of reference samples by applying vertical filter coefficients to the sample array.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4A illustrates an example of a 4-parameter motion model and FIG. 4B illustrates an example of a 6-parameter motion model.
FIG. 5 illustrates example motion vectors that may be associated with a subblock of video data.
FIG. 6A illustrates examples of spatial neighboring blocks that may be used in a temporal motion vector prediction mode.
FIG. 6B illustrates an example of deriving a sub-coding unit motion field by applying a motion shift.
FIG. 7 illustrates an example of motion vector usage.
FIG. 8 illustrates an example of luma prediction refinement based on a subblock motion vector.

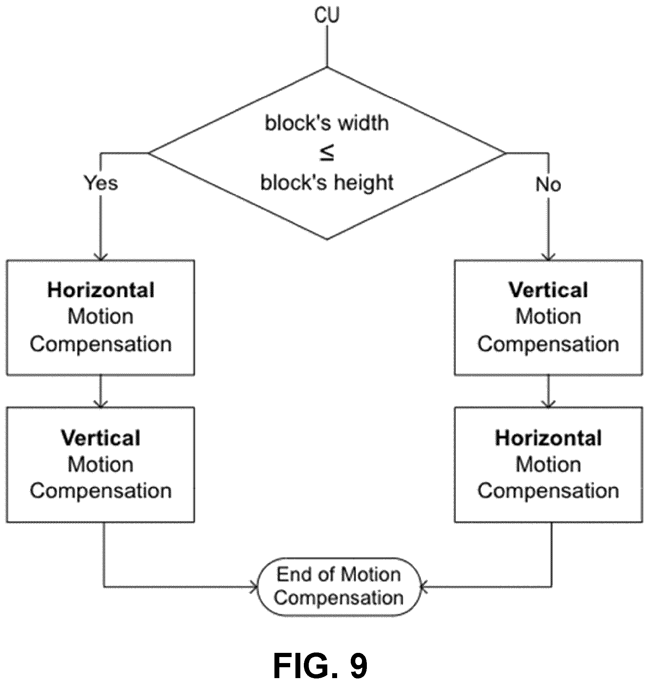

FIG. 9 shows a motion compensation applied to a block.

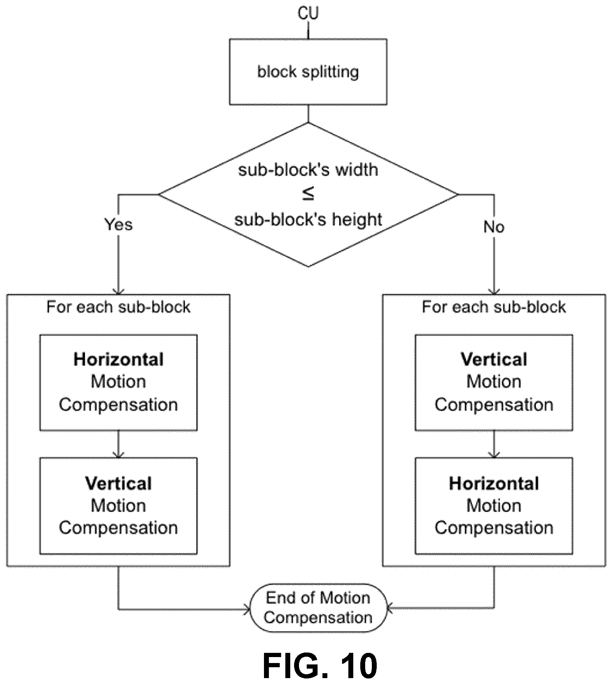

FIG. 10 shows a motion compensation process on a block (e.g., CU) composed of sub-blocks.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

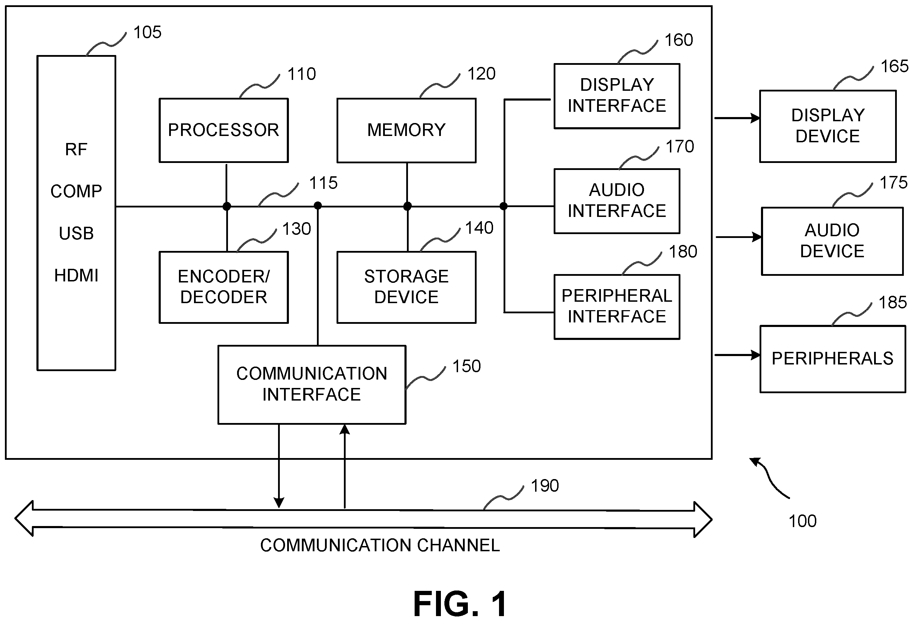

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

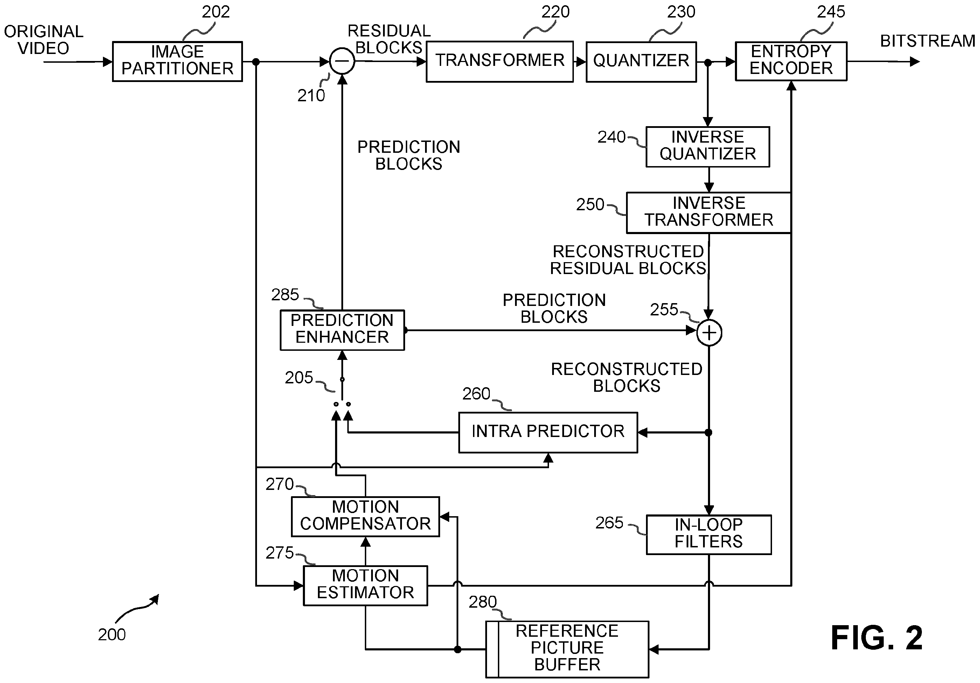

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (WC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

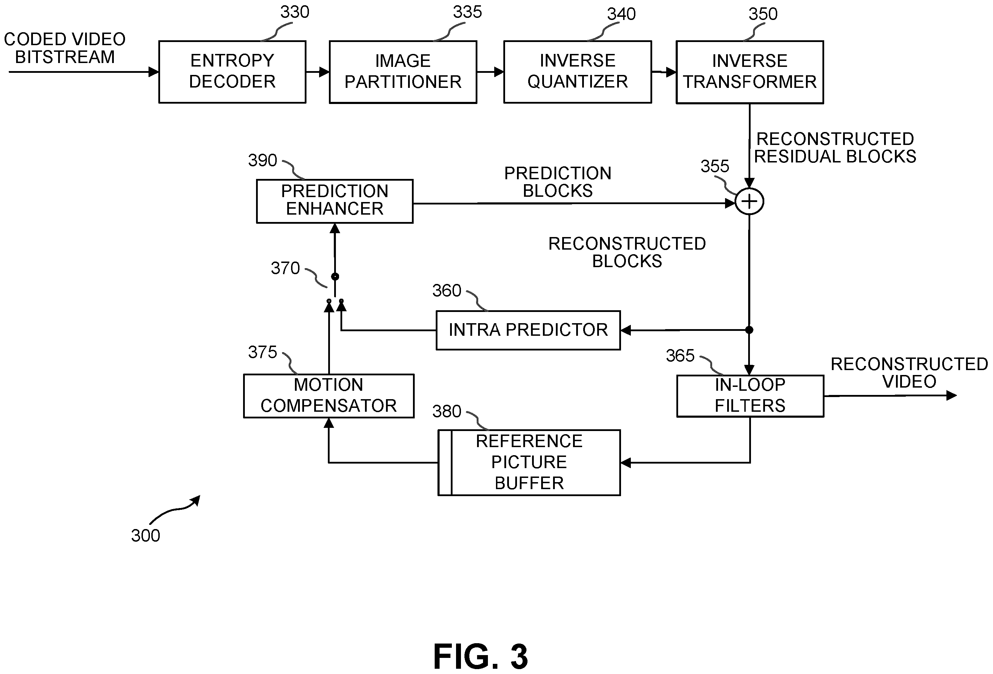

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, *Cb, Cr*).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

An affine motion compensated prediction may be performed during video coding (e.g., encoding and/or decoding). A translation motion model (e.g., only a translation motion model) may be applied for the motion compensated prediction (MCP). Different kinds of motion may be associated with a video such as, for example, zoom in/out, rotation, perspective motions, other irregular motions, and the like. A block-based affine motion compensated prediction may perform warping with motion compensation.

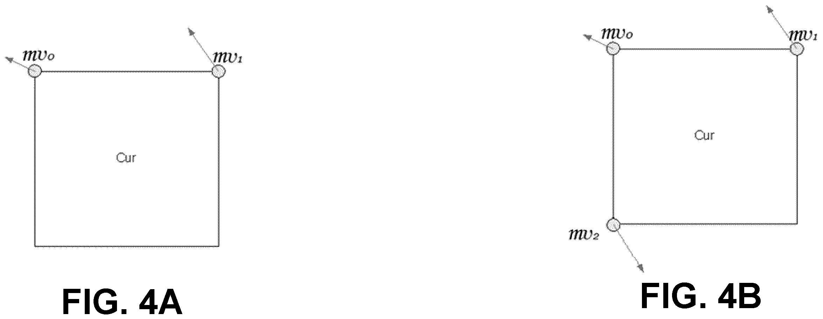

FIG. 4A shows an example in which the affine motion field of a video block may be described by the motion information of a two-control-point vector (e.g., a 4-parameter model). FIG. 4B shows an example in which the affine motion field of a video block may be described by the motion information of a three-control-point motion vector (e.g., a 6-parameter model).

For a 4-parameter affine motion model, for example as illustrated in FIG. 4A, the motion vector at a sample location (x, y) in a block may be derived as follows: $\left\{\begin{matrix}{mv}_{x} = \frac{{mv}_{1 x} - {mv}_{0 x}}{W} x + \frac{{mv}_{1 y} - {mv}_{0 y}}{W} y + {mv}_{0 x} \\ {mv}_{y} = \frac{{mv}_{1 y} - {mv}_{0 y}}{W} x + \frac{{mv}_{1 x} - {mv}_{0 x}}{W} y + {mv}_{0 y}\end{matrix}\right.$

For a 6-parameter affine motion model, for example as illustrated in FIG. 4B, the motion vector at a sample location (*x, y*) in a block may be derived as follows: $\left\{\begin{matrix}{mv}_{x} = \frac{{mv}_{1 x} - {mv}_{0 x}}{W} x + \frac{{mv}_{2 x} - {mv}_{0 x}}{H} y + {mv}_{0 x} \\ {mv}_{y} = \frac{{mv}_{1 y} - {mv}_{0 y}}{W} x + \frac{{mv}_{2 y} - {mv}_{0 y}}{H} y + {mv}_{0 y}\end{matrix}\right.$ where (*mv₀ₓ, mv_{0y}*) may be the motion vector of the top-left corner control point, (*mv₁ₓ, mv_{1y}*) may be the motion vector of the top-right corner control point, and (*mv₂ₓ, mv_{2y}*) may be the motion vector of the bottom-left corner control point, and H and W may indicate the block size (e.g., H may represent the height of the block while W may represent the width of the block).

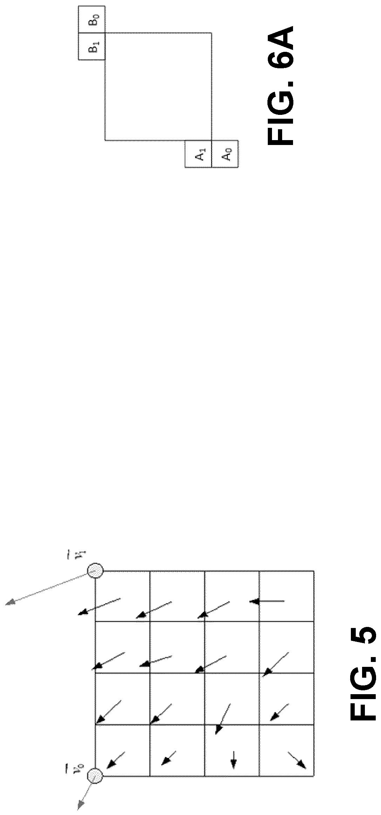

A motion compensated prediction may be simplified, for example, by applying a block based affine transform prediction. To derive a motion vector (MV) associated with a subblock (e.g., each subblock, such as each 4×4 luma subblock), the motion vector of the center sample of the subblock (e.g., as shown in FIG. 5) may be calculated according to equations (1) and (2) and/or may be rounded to 1/16 fractional-pel accuracy. One or more motion compensation interpolation filters may be applied to generate a prediction of the subblock with the derived motion vector. The subblock size of a chroma component may also be set (e.g., set to 4×4). The MV of a subblock (e.g., a 4×4 chroma subblock) may be calculated, for example, as the average of the MVs of the top-left and bottom-right luma subblocks in a collocated region (e.g., a collocated 8x8 luma region). For translational motion inter prediction, there may be multiple (e.g., two) affine motion inter prediction modes such as an affine merge mode and an affine motion vector prediction (AMVP) mode.

In some examples, the minimum affine subblock size may be set to be 4x4. In some examples, the minimum block may be set to 1x1 for both luma and chroma components. Affine motion compensation may be performed at pixel level.

Subblock-based temporal motion vector prediction (SbTMVP) may be supported for video coding (e.g., encoding and/or decoding). SbTMVP may be similar to temporal motion vector prediction (TMVP). SbTMVP may use the motion field in a collocated picture to improve motion vector prediction and a merge mode for coding units (CUs) in a current picture. The same collocated picture used by TMVP may be used for SbTMVP. SbTMVP may differ from TMVP in multiple aspects. For example, TMVP may predict a motion at a CU level while SbTMVP may predict a motion at a sub-CU level. As another example, TMVP may fetch temporal motion vectors from a collocated block in a collocated picture (e.g., the collocated block may be the bottom-right or center block relative to a current CU), while SbTMVP may apply a motion shift before fetching temporal motion information from the collocated picture (e.g., the motion shift may be obtained based on the motion vector from a spatial neighboring block of the current CU).

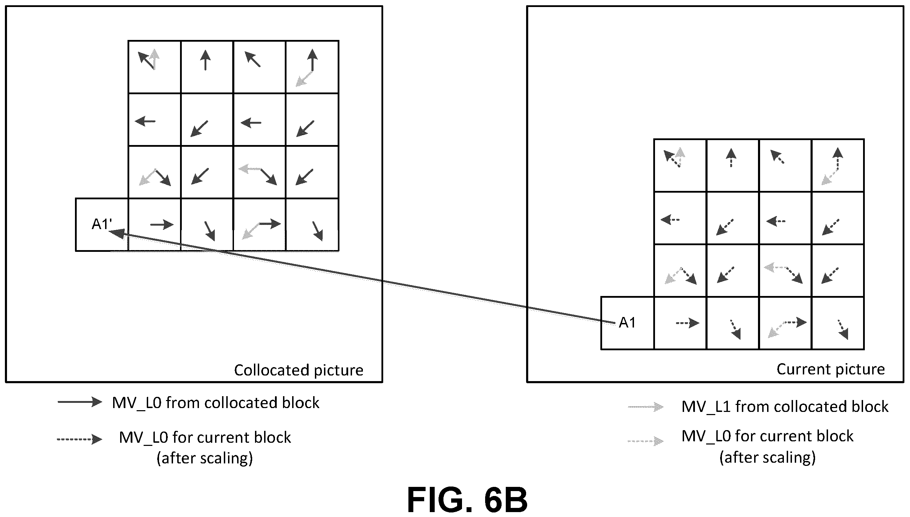

FIG. 6A and FIG. 6B illustrate examples of SbTMVP processes. SbTMVP may predict the motion vectors of sub-CUs within a current CU in multiple operations (e.g., two operations). As shown in FIG. 6A, a spatial neighbor A1 of the current CU may be examined. If A1 has a motion vector that uses the collocated picture as its reference picture, this motion vector may be selected to be the motion shift to be applied. If no such motion is identified, the motion shift may be set to (0, 0). As shown in FIG. 6B, the motion shift identified in the first step may be applied (e.g., the motion shift may be added to the current block's coordinates) to obtain sub-CU level motion information (e.g., motion vectors and/or reference indices) from the collocated picture. The example in FIG. 6B may assume that the motion shift is set to block A1's motion. For a sub-CU (e.g., each sub-CU), the motion information of its corresponding block (e.g., the smallest motion grid that may cover the center sample) in the collocated picture may be used to derive the motion information for the sub-CU. After the motion information of the collocated sub-CU is identified, the motion information may be converted to the motion vectors and/or reference indices of the current sub-CU (e.g., in a similar way as TMVP), where temporal motion scaling may be applied to align the reference pictures of the temporal motion vectors to those of the current CU.

A combined subblock-based merge list may contain an SbTMVP candidate and/or an affine merge candidate. The combined subblock-based merge list may be used for the signaling of a subblock-based merge mode. The SbTMVP mode may be enabled and/or disabled, for example, by a sequence parameter set (SPS) flag. If the SbTMVP mode is enabled, an SbTMVP predictor may be added to a list of subblock-based merge candidates (e.g., as the first entry of the list and followed by one or more affine merge candidates). The size of the subblock-based merge list may be signaled (e.g., in the SPS). The maximum allowed size of the subblock-based merge list may be set (e.g., set to a fixed value, such as 5).

A sub-CU size used in SbTMVP may be fixed (e.g., to be 8x8). The SbTMVP mode may be applicable (e.g., only applicable) to a CU that has a width and/or a height larger than or equal to 8 (e.g., as in the affine merge mode). The encoding logic of an additional SbTMVP merge candidate may be the same as for the other merge candidates. For example, for a CU (e.g., each CU) in a P or B slice, an additional RD check may be performed to decide whether to use the SbTMVP candidate.

Affine motion information may be stored (e.g., in a buffer). A control point motion vector (CPMV) of an affine CU may be stored in a buffer (e.g., in a separate buffer designated for such storage). The stored CPMV may be used (e.g., only used) to generate inherited control point motion vector predictors (CPMVPs) in the affine merge mode and/or an affine AMVP mode (e.g., for recently coded CUs). The subblock MVs derived from CPMVs may be used for various purposes including, for example, motion compensation, MV derivation of a merge/AMVP list of translational MVs, and/or deblocking.

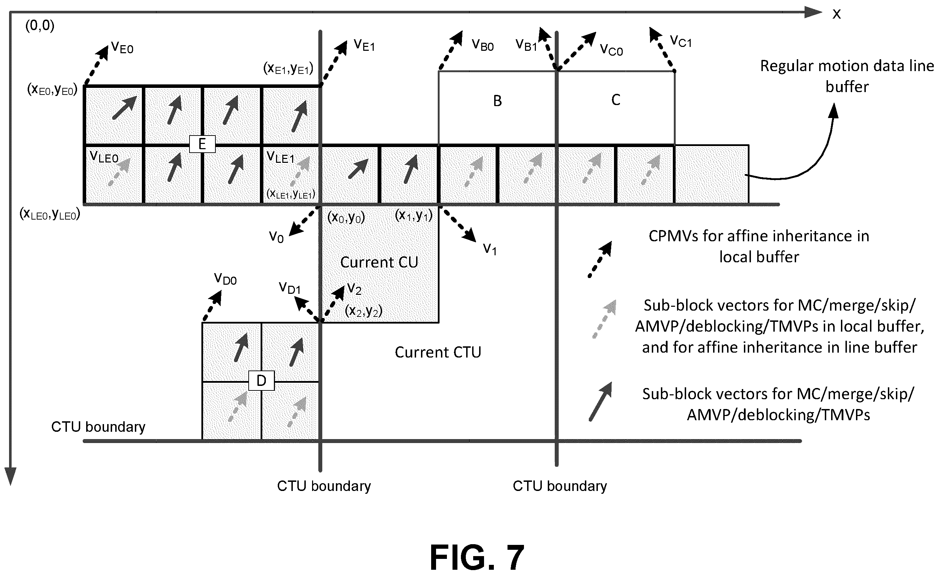

Affine motion data inheritance from CUs associated with an above-CTU may be treated differently than the inheritance from normal neighboring CUs (e.g., to avoid a picture line buffer for the additional CPMVs). If a candidate CU for affine motion data inheritance is in the above-CTU line, the bottom-left and bottom-right subblock MVs in the line buffer (e.g., instead of the CPMVs) may be used for affine MVP derivation. In this way, the CPMVs may be stored (e.g., only stored) in a local buffer. If the candidate CU is 6-parameter affine coded, the affine model may be degraded to a 4-parameter model. As shown in FIG. 7, along the top CTU boundary, the bottom-left and bottom right subblock motion vectors of a CU may be used for affine inheritance of the CUs in the bottom CTUs.

Prediction refinement with optical flow (PROF) may be performed in the affine mode. Subblock-based affine motion compensation may save memory access bandwidth and/or reduce computation complexity (e.g., compared to pixel-based motion compensation and/or at the cost of prediction accuracy penalty). PROF may be used to refine a subblock-based affine motion compensated prediction. The use of PROF may achieve a finer granularity of motion compensation without increasing the memory access bandwidth for motion compensation. For example, after the subblock-based affine motion compensation is performed, luma prediction sample may be refined by adding a difference that may be derived using an optical flow equation.

The PROF may be performed as follows. At a first step, subblock-based affine motion compensation may be performed to generate a subblock prediction *I(i,j).* At a second step, the spatial gradients *gₓ(i,j)* and *g_{y}(i,j)* of the subblock prediction may be calculated at a (e.g., each) sample location, for example, using a 3-tap filter [-1, 0, 1]. The gradient calculation may be the same as that performed in a bi-directional optical flow (BDOF) mode, for example, as illustrated by the equations below. ${g}_{x} \left(i, j\right) = \left(I\left(i+1,j\right)≫shift1\right) - \left(I\left(i-1,j\right)≫shift1\right)$ ${g}_{y} \left(i, j\right) = \left(I\left(i,j+1\right)shift1\right) - \left(I\left(i,j-1\right)≫shift1\right)$ wherein *shift*1 may be used to control the gradient's precision. The subblock (e.g., a 4x4 sub-block) prediction may be extended by a sample on one or more sides (e.g., on each side) for the gradient calculation. Those extended samples on the extended borders may be copied from the nearest integer pixel position in the reference picture, for example, to avoid additional memory bandwidth and/or additional interpolation computation.

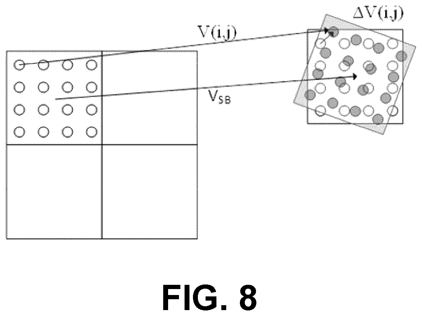

At a third step, luma prediction refinement may be determined by the following optical flow equation. $Δ I \left(i, j\right) = {g}_{x} \left(i, j\right) ∗ Δ {v}_{x} \left(i, j\right) + {g}_{y} \left(i, j\right) ∗ Δ {v}_{y} \left(i, j\right)$ where *Δv(i,j)* may represent the difference between a sample MV computed for sample location *(i,j),* denoted by *v(i,j),* and the subblock MV (e.g., V_{SB} shown in the figure) of the subblock to which sample *(i,j)* belongs, as shown in FIG. 8. Δv(i,j) (e.g., represented by the short arrow in the figure) may be quantized in the unit of 1/32 luma sample precision.

Since the affine model parameters and/or the sample location relative to the subblock center may not be changed from subblock to subblock, Δ*v*(*i, j*) may be calculated for a first subblock and reused for other subblocks in the same CU. Let *dx*(*i, j*) and *dy*(*i, j*) be the horizontal and vertical offsets from the sample location (i,j) to the center of the subblock (*x_{SB}, y_{SB}*), Δ*v*(*x, y*) may be derived by the following equations: $\left\{\begin{matrix}dx \left(i, j\right) = i - {x}_{SB} \\ dy \left(i, j\right) = j - {y}_{SB}\end{matrix}\right.$ $\left\{\begin{matrix}Δ {v}_{x} \left(i, j\right) = C ∗ dx \left(i, j\right) + D ∗ dy \left(i, j\right) \\ Δ {v}_{y} \left(i, j\right) = E ∗ dx \left(i, j\right) + F ∗ dy \left(i, j\right)\end{matrix}\right.$ wherein C, D, E, and F may be defined as shown below.

The center of the subblock (*x_{SB}, y_{SB}*) may be calculated as ((W_{SB} - 1)/2, (H_{SB} - 1)/2) (e.g., to keep the accuracy of the calculation), where W_{SB} and H_{SB} may represent the subblock width and height, respectively. For a 4-parameter affine model, the following may be true: $\left\{\begin{matrix}C = F = \frac{{v}_{1 x} - {v}_{0 x}}{w} \\ E = - D = \frac{{v}_{1 y} - {v}_{0 y}}{w}\end{matrix}\right.$

For a 6-parameter affine model, the following may be true: $\left\{\begin{matrix}C = \frac{{v}_{1 x} - {v}_{0 x}}{w} \\ D = \frac{{v}_{2 x} - {v}_{0 x}}{h} \\ E = \frac{{v}_{1 y} - {v}_{0 y}}{w} \\ F = \frac{{v}_{2 y} - {v}_{0 y}}{h}\end{matrix}\right.$ where (*v*₀*ₓ, v*_{0*y*}), (*v*₁*ₓ, v*_{1*y*}), (*v*₂*ₓ, v*_{2*y*}) may represent the top-left, top-right and bottom-left control point motion vectors, and w and h may represent the width and height of the CU.

At a fourth step, the luma prediction refinement Δ*I*(*i, j*) may be added to the subblock prediction *I*(*i, j*)*.* The final prediction *I'* may be generated using the following equation: $I ′ \left(i, j\right) = I \left(i, j\right) + Δ I \left(i, j\right)$

PROF may not be applied in some cases to an affine coded CU. For example, PROF may not be applied if multiple (e.g., all) control point MVs are the same, which may indicate that the CU only has translational motion. As another example, PROF may not be applied if the affine motion parameters are greater than a specified limit (e.g., because subblock-based affine MC may be degraded to CU-based MC to avoid using a large memory access bandwidth).

A fast encoding method may be applied to reduce the encoding complexity of affine motion estimation with PROF. PROF may not be applied at an affine motion estimation stage in some cases. For example, if a CU is not the root block and its parent block does not select the affine mode as its best mode, PROF may not be applied since the possibility for a current CU to select the affine mode as best mode is low. As another example, if the magnitude of one or more (e.g., all) of four affine parameters (C, D, E, F) are smaller than a predefined threshold and the current picture is not a low delay picture, PROF may not be applied (e.g., because the improvement introduced by PROF may be small for this case). In this way, the affine motion estimation with PROF may be accelerated.

PROF (e.g., as described herein) may be applied to motion vector(s) of a sub-subblock (e.g., a plurality of pixels).

The encoder may select the optimal (e.g., best) block in a reference frame after applying a motion model (e.g., translational, affine or sub-block based motion compensation).

Motion compensation may be performed per area of uniform motion (translation). The area may be as small as 4x4 (e.g., sub-block case) or larger, but in some examples, the minimum size may be 1x1 (e.g., pixel-based motion compensation). For a block using an affine motion model, pixels may be motion compensated using a motion vector. In some examples, each pixel in a block may be motion compensated using a unique motion vector.

Allowing pixel-based motion compensation may improve the accuracy of predicted blocks. Allowing pixel-based motion compensation may increase the complexity of solution by multiplying the number of motion compensations (e.g., and/or the total number of operations and/or memory accesses) used (e.g., needed) for a block (see 11-12).

Horizontal filtering of the total number of operations used (e.g., needed) for motion compensation of a block of size h x w may be (e.g., may always be) performed (e.g., performed first). Vertical filtering the total number of operations used (e.g., needed) for motion compensation of a block of size h x w may follow horizontal filtering. The horizontal and/or vertical filtering may use N taps interpolation filter that may be expressed as follows:
*Number* of *Operations* = *N.w.(h+N-1)*/*(h.w) + N.(h.w)*/*(h.w)* for horizontal and vertical operations, *and after simplification,*$Number of Operations = N . \left(2h+N-1\right) / h \left(in MAC/Pixel\right)$

In examples, for memory bandwidth, at an approximation (e.g., a first approximation), a number (e.g., a total number) of memory accesses for motion compensation of a block h x w using a N taps filter may be:$Memory accesses = \left(h+N-1\right) . \left(w+N-1\right) / \left(h . w\right) \left(in number of access/Pixel\right)$

**Table 1: Example of Motion Compensation Complexity (12 taps filter)**

| Block size (Width x Height) | Number of operations (in MAC/Pixel) | Number of memory access (in Access/Pixel) |
|---|---|---|
| 4 x 4 | 57 | 14.1 |
| 2 x 2 | 90 | 42.2 |
| 1 x 1 | 156 | 144 |
| 2 x 1 | 156 | 78 |
| 4 x 1 | 156 | 45 |
| 1 x 2 | 90 | 78 |
| 1 x 4 | 57 | 45 |

The complexity introduced by the pixel-based motion compensation may be mitigated. The motion compensation may be done with a minimum sub-subblock size height of N where N may be equal to 2 or N may be equal to 4 depending on the targeted accuracy (e.g., allowing a sub-block size of dimension 1xN or larger).

The horizontal and/or vertical motion compensations may be processed in a different order depending on the sub-block width relative to the sub-block height, for example, if the sub-block width is smaller than the sub-block height, the horizontal motion compensation may be processed first, and the vertical motion compensation may be processed in a second operation. If the sub-block is not smaller than the sub-block height, for example, the vertical motion compensation may be processed first and the horizontal motion compensation may be processed second.

In some examples, the minimum height of a block or a subblock may be a preset number, such 2 or 4 depending on the targeted accuracy for a type of sub-block. In some examples, the minimum width of a block or a subblock may be 2 or 4 targeted accuracy for a type of sub-block. For example, N may be equal to 2 or N may be equal to 4 depending on the targeted accuracy and/or a complexity tradeoff for a type of sub-block with a minimum width and/or height equal or larger than N.

In the following, we take the example of the affine motion model, but the same principle may be applied to any motion model.

In examples, a (sub-)block with a (sub-)block height equal or larger than 1 may be allowed. An example device may determine a candidate height for a current block. The device may determine a prediction block height based on the candidate height and a minimum prediction block height. On a condition that the candidate height is less than the minimum prediction block height, the prediction block height may be equal to the minimum prediction block height. On a condition that the candidate height is greater than or equal to the minimum prediction block height, the prediction block height may be equal to the candidate height. The device may predict the current block based on the prediction block height. The device may encode and/or decode the current block based on the predicted current block.

In examples, a (sub-)block with a (sub-)block width equal or larger than 1 may be allowed. An example device may determine a candidate width for a current block. The device may determine a prediction block width based on the candidate width and a minimum prediction block width. On a condition that the candidate width is less than the minimum prediction block width, the prediction block height may be equal to the minimum prediction block width. On a condition that the candidate width is greater than or equal to the minimum prediction block width, the prediction block height may be equal to the candidate height. The device may predict the current block based on the prediction block width. The device may encode and/or decode the current block based on the predicted current block.

As described in (11) and shown in Table 1, for the encoder and/or decoder, the overall number of operations used (e.g., needed) by motion compensation may be related to the height of the subblock and/or independent of the width.

To avoid pixel-based affine motion compensation complexity (e.g., and instead of using sub-block equal or larger than NxN, with N=2 or N=4, sub-blocks may have a minimum height equal or larger than a minimum prediction block height, N. N may be equal to 2 (preferably) or N equal to 4 (if less accuracy in motion compensation may be requested) and with a width equal at least to 1.

In examples, the order of processing the horizontal and the vertical motion compensation on a block (e.g., a block or a subblock) may be determined based on comparing the height and/or width size of the block. An example device (e.g., for video decoding) may obtain a current block, wherein the current block has a height and a width. The device may determine an order for performing motion compensation based on the height and the width. The order for performing motion compensation may indicate whether to perform motion compensation for the current block in a horizontal direction prior to, or subsequent to performing motion compensation for the current block in a vertical direction. The device may obtain a plurality of reference samples by performing motion compensation for the current block in the order for performing motion compensation. The device may decode the current block based on the plurality of reference samples.

In some example encoders and/or decoders, the motion compensation of a block or sub-block may be done in two operations (e.g., stages), for example. The first operation may be a pass in a horizontal direction. The second operation may be a pass in vertical direction.

A first number of operations to perform motion compensation for the first block in the horizontal direction prior to performing motion compensation for the first block in the vertical direction may be less than a second number of operations to perform motion compensation for the first block in the vertical direction prior to performing motion compensation for the first block in the horizontal direction. For example, if the order of operations for motion compensation of a block (e.g., of h x w) is changed (e.g., vertical direction first and horizontal direction), the total number of operations may be:$Number of operations = N . \left(2w+N-1\right) / w \left(in MAC/Pixel\right)$

Comparing (11) (Horizontal First) and (12) (Vertical first), the motion compensation complexity may be reduced by applying the processing in the direction of the dimension of the smaller block first, and/or the other direction.

In examples, the motion compensation may be processed in different orders, for example, depending on the shape of the block or subblock. For example, the motion compensation may be applied in the horizontal direction first (e.g., followed by the vertical direction in a second operation) for some blocks, and applied in the vertical direction first (e.g., followed by the horizontal direction in the second operation) for other blocks.

The order of the horizontal and vertical processing may depend on the size of the block (e.g., or the sub-block). If the width of the block (e.g., or sub-block) is smaller than the height of the block (e.g., or sub-block), the motion compensation on the block (e.g., or sub-block) may be performed in the horizontal direction first, for example. If the width of the block (e.g., or sub-block) is larger than the height of the block (e.g., or sub-block), the motion compensation may be performed in the vertical direction first, for example.

For example, a video decoding device may obtain a first block. The first block may have a first height and a first width. The first height may be greater than the first width. Based on the first height being greater than the first width, the device may obtain a first plurality of reference samples by performing motion compensation for the first block in a horizontal direction prior to performing motion compensation for the first block in a vertical direction. The device may decode the first block based on the first plurality of reference samples. The device may obtain a second block. The second block may have a second height and a second width. The second width may be greater than the second height. Based on the second width being greater than the second height, the device may obtain a second plurality of reference samples by performing motion compensation for the second block in the vertical direction prior to performing motion compensation for the second block in the horizontal direction. The device may decode the second block based on the second plurality of reference samples.

The device may perform motion compensation for the first block in the horizontal direction (e.g., by determining a sample array based on horizontal filter coefficients) prior to performing motion compensation for the first block in the vertical direction (e.g., by determining a sample array based on vertical filter coefficients). The device may determine the first plurality of reference samples by applying vertical filter coefficients to the sample array.

**Table 2 : Example of Motion Compensation Complexity using, for example, a 12 taps filter, for example, in the horizontal direction first**

| Block size (Width x Height) | Number of operations (in MAC/Pixel) | Number of memory access (in Access/Pixel) |
|---|---|---|
| 4 x 4 | 57 | 14.1 |
| 2 x 2 | 90 | 42.2 |
| 1 x 1 | 156 | 144 |
| 2 x 1 | 90 | 78 |
| 4 x 1 | 57 | 45 |
| 1 x 2 | 90 | 78 |
| 1 x 4 | 57 | 45 |

If the block (e.g., or sub-block) is square (e.g., the height of the block equals the width of the block), the two processes (e.g., vertical first or horizontal first) are equivalent in terms of complexity and an order may be selected. For example, the device may obtain a current block with a height that is equal to a width of the current block. Based on the height being equal to the width, the device may obtain a plurality of reference samples by performing motion compensation for the current block in the horizontal direction prior to performing motion compensation for the current block in the vertical direction. The device may decode the current block based on the plurality of reference samples.

To ensure consistency and avoid a rounding approximation, the motion compensation computation of a block or sub-block may follow the same order in encoding and decoding.

FIG. 1 shows a motion compensation applied to a block. FIG. 2 shows an example of application for a block (e.g., or a CU) of dimension (h x w). If the width of the block (w) is smaller than or equal to the height of the block (h), the horizontal motion compensation may be performed first followed by the vertical motion compensation. If the width of the block (w) is larger than the height of the block (h), the vertical motion compensation may be performed first followed by the horizontal motion compensation.

In some examples, the condition may be the width of the block (w) is smaller than the height of the block. In some examples, the condition may be the width of the block (w) is smaller than or equal to the block's height (h).

FIG. 2 shows a motion compensation process on a block (e.g., CU) composed of sub-blocks. The FIG. 2 shows an example of application for a CU composed of sub-blocks. The block of dimension (w x h) may be split into M sub-block(s) of dimensions sw x sh (e.g., with sw ≤ w and sh ≤ h). For a (e.g., each) sub-block, if the width of the sub-block (sw) is smaller than or equal to the height of the sub-block' height (sh), the horizontal motion compensation may be performed first followed by the vertical motion compensation. If the width of the sub-block (sw) is larger than the height of the sub-block (sh), the vertical motion compensation may be performed first followed by the horizontal motion compensation.

The condition may be the width of the sub-block (sw) is smaller than the height of the sub-block (sh) instead of the width of the sub-block (sw) is smaller than or equal to the height of the sub-block (sh).

In examples, a sub-block with a width or height sub-block dimension equal to or larger than N, for example, with N=2 or N=4, may be allowed. The motion interpolation filter may be processed (e.g., processed first) on the larger dimension of the sub-block and pixel-based motion compensation may be avoided. The motion interpolation filter may be applied to allow a sub-blocks with a minimum size (vertical or horizontal) equal or larger than N, N could be equal to 2 (preferably) or N equal to 4 (if less accuracy in motion compensation may be requested).One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A video decoding device comprising:
a processor configured to:
obtain a first block, wherein the first block has a first height and a first width, and wherein the first height is greater than the first width;
based on the first height being greater than the first width, obtain a first plurality of reference samples by performing motion compensation for the first block in a horizontal direction prior to performing motion compensation for the first block in a vertical direction;
decode the first block based on the first plurality of reference samples;
obtain a second block, wherein the second block has a second height and a second width, and wherein the second width is greater than the second height;
based on the second width being greater than the second height, obtain a second plurality of reference samples by performing motion compensation for the second block in the vertical direction prior to performing motion compensation for the second block in the horizontal direction; and
decode the second block based on the second plurality of reference samples.

2. The video decoding device of claim 1, wherein the processor is further configured to:
determine a candidate height associated with a third block;
determine a third height of the third block based on the candidate height and a minimum prediction block height, wherein, on a condition that the candidate height is less than the minimum prediction block height, the third height is equal to the minimum prediction block height;
obtain a third plurality of reference samples by performing motion compensation for the third block; and
decode the third block based on the third plurality of reference samples.

3. The video decoding device of claim 1, wherein the first width is greater than or equal to one pixel, and wherein the processor is further configured to:
determine a candidate height associated with a third block;
determine a third height of the third block based on the candidate height and a minimum prediction block height, wherein, on a condition that the candidate height is greater than or equal to the minimum prediction block height, the third height is equal to the candidate height
obtain a third plurality of reference samples by performing motion compensation for the third block; and
decode the third block based on the third plurality of reference samples.

4. The video decoding device of claim 2 or 3, wherein the minimum prediction block height is equal to two pixels or four pixels.

5. The video decoding device of any of claims 1-4, wherein a first number of operations to perform motion compensation for the first block in the horizontal direction prior to performing motion compensation for the first block in the vertical direction is less than a second number of operations to perform motion compensation for the first block in the vertical direction prior to performing motion compensation for the first block in the horizontal direction.

6. The video decoding device of any of claims 1-5, wherein the processor is further configured to:
obtain a third block, wherein the third block has a third height and a third width, and wherein the third height is equal to the third width;
based on the third height being equal to the third width, obtain a third plurality of reference samples by performing motion compensation for the third block in the horizontal direction prior to performing motion compensation for the third block in the vertical direction; and
decode the third block based on the third plurality of reference samples.

7. The video decoding device of any of claims 1-6, wherein the processor being configured to obtain the first plurality of reference samples by performing motion compensation for the first block in the horizontal direction prior to performing motion compensation for the first block in the vertical direction comprises:
determine a sample array based on horizontal filter coefficients; and
determine the first plurality of reference samples by applying vertical filter coefficients to the sample array.

8. A video encoding device comprising:
a processor configured to:
obtain a first block, wherein the first block has a first height and a first width, and wherein the first height is greater than the first width;
based on the first height being greater than the first width, obtain a first plurality of reference samples by performing motion compensation for the first block in a horizontal direction prior to performing motion compensation for the first block in a vertical direction;
encode the first block based on the first plurality of reference samples;
obtain a second block, wherein the second block has a second height and a second width, and wherein the second width is greater than the second height;
based on the second width is greater than the second height, obtain a second plurality of reference samples by performing motion compensation for the second block in the vertical direction prior to performing motion compensation for the second block in the horizontal direction; and
encode the second block based on the second plurality of reference samples.

9. The video encoding device of claim 8, wherein the first width is greater than or equal to one pixel, and wherein the processor is further configured to:
determine a candidate height associated with a third block;
determine a third height of the third block based on the candidate height and a minimum prediction block height, wherein, on a condition that the candidate height is less than the minimum prediction block height, the third height is equal to the minimum prediction block height;
obtain a third plurality of reference samples by performing motion compensation for the third block; and
encode the third block based on the third plurality of reference samples.

10. The video encoding device of claim 8, wherein the first width is greater than or equal to one pixel, and wherein the processor is further configured to:
determine a candidate height associated with a third block;
determine a third height of the third block based on the candidate height and a minimum prediction block height, wherein, on a condition that the candidate height is greater than or equal to the minimum prediction block height, the third height is equal to the candidate height;
obtain a third plurality of reference samples by performing motion compensation for the third block; and
encode the third block based on the third plurality of reference samples.

11. The video encoding device of claim 9 or 10, wherein the minimum prediction block height is equal to two pixels or four pixels.

12. The video encoding device of any of claims 8-11, wherein a first number of operations to perform motion compensation for the first block in the horizontal direction prior to performing motion compensation for the first block in the vertical direction is less than a second number of operations to perform motion compensation for the first block in the vertical direction prior to performing motion compensation for the first block in the horizontal direction.

13. The video encoding device of any of claims 8-12, wherein the processor is further configured to:
obtain a third block, wherein the third block has a third height and a third width, and wherein the third height is equal to the third width; and
based on the third height being equal to the third width, obtain a third plurality of reference samples by performing motion compensation for the third block in the horizontal direction prior to performing motion compensation for the third block in the vertical direction; and
encode the third block based on the third plurality of reference samples.

14. The video encoding device of any of claims 8-13, wherein the processor being configured to obtain the first plurality of reference samples by performing motion compensation for the first block in the horizontal direction prior to performing motion compensation for the first block in the vertical direction comprises:
determine a sample array based on horizontal filter coefficients; and
determine the first plurality of reference samples by applying vertical filter coefficients to the sample array.

15. A device for video decoding, comprising:
a processor configured to:
obtain a current block, wherein the current block has a height and a width;
determine an order for performing motion compensation based on the height and the width, wherein the order for performing motion compensation indicates whether to perform motion compensation for the current block in a horizontal direction prior to, or subsequent to performing motion compensation for the current block in a vertical direction;
obtain a plurality of reference samples by performing motion compensation for the current block in the order for performing motion compensation; and
decode the current block based on the plurality of reference samples.
